Europäisches Patentamt

European Patent Office

Office européen des brevets

(19)

(11) **EP 1 172 202 B1**

(12) **EUROPEAN PATENT SPECIFICATION**

(45) Date of publication and mention
of the grant of the patent:
**17.11.2004 Bulletin 2004/47**

(51) Int Cl.⁷: **B32B 27/34**, A22C 13/00

(86) International application number:
**PCT/JP2000/002009**

(21) Application number: **00912963.6**

(22) Date of filing: **30.03.2000**

(87) International publication number:
**WO 2000/059724 (12.10.2000 Gazette 2000/41)**

(54) **MULTILAYERED CASING FILM**

MEHRSCHICHTIGE VERPACKUNGSFOLIE

FILM A BOYAU MULTICOUCHE

(84) Designated Contracting States:
**AT BE CH CY DE DK ES FI FR GB GR IE IT LI LU MC NL PT SE**

(30) Priority: **02.04.1999 JP 9620999**

(43) Date of publication of application:
**16.01.2002 Bulletin 2002/03**

(73) Proprietor: **KUREHA KAGAKU KOGYO KABUSHIKI KAISHA**
**Chuo-ku, Tokyo 103-8552 (JP)**

(72) Inventors:
• **KITADA, Ichiro, Kureha Kagaku Kogyo K.K.**
**Niihari-gun,, Ibaraki-ken 311-3436 (JP)**
• **TOBITA, Hisanori, Kureha Kagaku Kogyo K.K.**
**Niihari-gun, Ibaraki-ken 311-3436 (JP)**
• **ANZAI, Mitsuru, Kureha Kagaku Kogyo K.K.**
**Niihari-gun, Ibaraki-ken 311-3436 (JP)**

(74) Representative: **du Pont, Jeroen**
**Exter Polak & Charlouis B.V.**
**P.O. Box 3241**
**2280 GE Rijswijk (NL)**

(56) References cited:
EP-A- 0 305 959          DE-A- 4 017 046
JP-A- 5 305 659          JP-A- 6 227 573
JP-A- 7 016 943          JP-A- 10 095 086
JP-A- 11 034 261         JP-A- 62 273 849

## EP 1 172 202 B1

**Description**

The present invention relates to a multilayer casing film for packaging foods, such as sausage and ham. More specifically, the present invention relates to a polyamide-olefin complex multilayer casing film which ensures a strong inter-layer adhesion during stretching and after stretching, has heat resistance and is excellent in thermal stability at the time of forming and processing.

DE-A-4 017 046 discloses a multilayer casing having PA-Layers of differing thickness.

BACKGROUND ART:

Food, such as sausage and ham, after filling and packaging in a casing, is heat-treated and then supplied to the market. Properties required to be satisfied by the casing (film) during the production steps may include the following.

That is, a casing should not be ruptured or change its shape noticeably from the cylindrical shape due to expansion of the content material, etc., during the heat treatment after filling with the content material. Thus, a high-temperature creep resistance is required. If the high-temperature creep resistance is insufficient, when the casing filled with the content material is hung in a heating device such as a steam vessel, i.e., subjected to so-called hang-boiling, the casing is liable to cause an additional size change because the weight of the content material per se is added, thus remarkably impairing the appearance of the product.

The casing should preferably comprise a multilayer film which is well moisture-proof and little water vapor-permeable, thus showing good water vapor barrier characteristic. The loss of water content from the content material causes a weight loss or shortage of the product, thus causing an economical loss. A casing principally comprising a polyamide resin is inferior in water vapor barrier characteristic, so that the improvement thereof is desired.

A casing should allow easy secondary processing such as shirring, and filling. A pasty sausage is ordinarily filled by using a casing subjected to shirring. The shirring is a step of folding a casing having a certain length (generally 20 - 50 cm) in a longitudinal direction into a shape like bellows. A larger length of shirred casing is more efficient as a larger amount of sausage is filled at one time. In other words, a casing capable of being folded into a smaller length of bellows-like form is said to have a better shirring characteristic. Also the casing should desirably have a sufficient flexibility and should not cause pinholes at the time of filling with the content material.

A casing should desirably be less liable to cause exudation of a jelly-like substance such as gravy or drip from the content material to the boundary with the casing. Accordingly, the casing should preferably cause meat adhesion with the content material.

The occurrence of wrinkles or many pleats in a casing filled with sausage or ham is not desirable because it provides an impression of stale product and inferior product appearance to the consumers. Accordingly, the casing should preferably have a heat-shrinkability.

A casing should preferably have a gas barrier characteristic so as to prevent rotting of the content material during the circulation period.

As a resin material of a casing for packaging foods, such as sausage and ham, a polyamide resin excellent in heat-resistance and meat-adhesion characteristic is generally used. Particularly, a polyamide copolymer is frequently used, and a casing formed therefrom is excellent in stretchability, heat-shrinkability, shirring processability and meat-adhesion characteristic but is inferior in high-temperature creep resistance, so that when a vertically extending cylindrical packaged product filled with a content material such as food is subjected to a heat treatment, (i.e., hang boiling), a peripheral length of a lower part is unnaturally increased than a peripheral length of an upper part thereof (i.e., causes a lower-part swelling) to impair the product value. Accordingly, it is desired to provide a casing film which has improved high-temperature creep resistance and causes little weight loss of product during the period of circulation on the market, i.e., showing little water-vapor permeability, while retaining excellent properties, such as stretchability and heat-shrinkability.

For improving these properties, it may be conceived to laminate a polyolefin resin in addition to a polyamide resin layer. However, a polyamide resin and a polyolefin resin ordinarily have different optimum stretching conditions. For examples, it is preferred to effect stretching in order to impart strengths such as high-temperature creep resistance, and heat-shrinkability, but at that time, the adhesion between the polyamide layer and the polyolefin layer is weakened to result in inter-layer peeling, so that it becomes difficult to effectively increase the stretching ratio.

A principal object of the present invention is to provide a polyamide-polyolefin-based multilayer casing film having improved the high-temperature creep resistance as a problem of a conventional multilayer casing film, and also having excellent thermal stabilities during forming and processing, while maintaining characteristics thereof such as heat-resistance, meat-adhesion characteristic, stretchability, heat-shrinkability and shirring processability.

2

DISCLOSURE OF INVENTION:

A multilayer casing film according to the present invention has been developed so as to achieve the above-mentioned object, and more specifically, is characterized by comprising at least three layers including two polyamide layers, and an adhesive polyolefin layer disposed between the polyamide layers; wherein at least one of the polyamide layers comprises a polyamide homopolymer, one polyamide layer comprising a polyamide homopolymer has a higher melting point and a smaller thickness than the other polyamide layer, and the adhesive polyolefin layer is in direct contact with at least one of the polyamide layers and comprises an acid-modified α-olefin resin.

Thus, in the multilayer casing film of the present invention, a high-temperature creep resistance as a whole is ensured by a thin layer of a polyamide homopolymer having a relatively high crystallinity and good heat-resistance; the other polyamide layer, preferably polyamide copolymer layer, having a larger thickness and a lower melting point allows a film formation as by inflation, for example; and a possible problem of cracking, peeling, etc. caused during stretch-forming of such a thin polyamide homopolymer layer is solved by an adhesive polyolefin layer disposed between the two polyamide layers, particularly adjacent to the thin polyamide homopolymer layer, whereby a multilayer casing film suitable for packaging of food, such as ham and sausage.

According to a preferred embodiment of the multilayer casing film of the present invention, an intermediate layer comprising a thermoplastic resin selected from the group consisting of polyolefin resins and gas-barrier resins is further inserted between the two polyamide layers, thereby improving the water vapor-barrier characteristic and/or gas-barrier characteristic.

BEST MODE FOR PRACTICING THE INVENTION:

The multilayer casing film of the present invention basically comprises a multilayer film at least three laminated layers including two polyamide layers and an adhesive polyamide layer disposed therebetween, wherein at least one of the two polyamide layers comprises polyamide homopolymer.

The polyamide homopolymer constituting at least one polyamide layer (hereinafter sometimes referred to as a "first polyamide layer") refers to a polyamide having a form of polycondensate between one acid unit and one amine unit and can be either of nylon l-type (e.g., nylon 6 (sometimes abbreviated as Ny6), nylon 11, nylon 12, etc.) formed by ring-opening polymerization of ω-lactam or, polycondensation between molecules of a single ω-amino acid and nylon m(n+2)-type (e.g., nylon 66 (sometimes abbreviated as Ny66), nylon 610, nylon 612, etc.) formed by polycondensation between a single species of diamine and a single species of dicarboxylic acid. It is particularly preferred to use nylon 6 or nylon 12.

In addition to such aliphatic polyamide homopolymers, it is possible to use an aromatic polyamide homopolymer, such as nylon MXD6 (polymetaxylene adipamide), nylon 6I (polyhexamethylene isophthalamide), or nylon 6T (polyhexamethylene terephthalamide). Such an aromatic polyamide homopolymer may generally be used in mixture with a polyamide homopolymer as described above.

The polyamide homopolymer constituting the first polyamide layer is caused to have a melting point of preferably 160 - 260 °C, more preferably 170 - 230 °C, by using one species or two or more species in mixture of the above-mentioned polyamide homopolymers, so as to ensure high-temperature creep resistance required of the multilayer casing film according to the present invention. Within an extent of maintaining such a melting point (a peaktop temperature of a main peak on a DSC heat-absorption curve), it is possible to blend a polyamide copolymer as described hereinafter or another thermoplastic resin in a proportion of, e.g., up to 30 wt. %.

The first polyamide layer formed of such a polyamide homopolymer may have a thickness determined in view of a balance between the high-temperature creep resistance and the shirring processability and stretchability required of the product multilayer casing film, preferably in the range of 2 - 10 μm, further preferably 2 - 7 μm. If the thickness exceeds 10 μm, the stretchability and shirring processability are liable to be impaired, and below 2 μm, the first polyamide layer is liable to be cracked (or split) at the time of stretch-forming.

The other polyamide layer (hereinafter sometimes referred to as "second polyamide layer") of the two polyamide layers constituting the multilayer casing film of the present invention, may comprise a polyamide homopolymer similar to the one constituting the first polyamide layer or a polyamide copolymer, which preferably has a melting point of 120 - 220 °C, more preferably 130 - 200 °C, so as to have a melting point lower than that of the polyamide homopolymer constituting the first polyamide layer by 20 - 100 °C. This is for providing a necessary stretchability in combination with the first polyamide layer while ensuring the high-temperature creep-resistance as a whole.

Within an extent of satisfying the above-mentioned melting point relationship, the second polyamide layer can comprise a polyamide homopolymer similar to the one constituting the first polyamide layer but may preferably comprise a polyamide copolymer, which shows a better stretchability. Herein, the polyamide copolymer means a polyamide formed from a (di)amine unit and a (di)carboxylic acid unit, of which at least one comprises two or more species thereof. Preferred examples thereof may include: nylon 6-66 (sometimes abbreviated as Ny6-66), nylon 6-12, nylon 6-69, nylon 6-610 and nylon 66-610. Among there, nylon 6-66 and nylon 6-12 are preferred. In addition to these aliphatic polyamide copolymers, it is also possible to use an aromatic polyamide copolymer such as nylon 6-6I, nylon 66-610-MXD6, nylon 6-12-MXD6, or nylon 6I-6T (polyhexamethylene isophthalamide/terephthalamide which is a copolymer of isophthalic acid, terephthalic acid and hexamethylene diamine. Such an aromatic polyamide copolymer may generally be used in mixture with an aliphatic polyamide copolymer as described above.

The polyamide copolymer used for constituting the second polyamide layer according to a preferred embodiment of the present invention is caused to satisfy the above-mentioned melting point relation by using one species or two or more species in mixture of the above-mentioned polyamide copolymers. As far as this is satisfied, it is possible to blend the above-mentioned polyamide homopolymer or another thermoplastic resin in a proportion of up to, e.g., 30 wt. %.

The second polyamide layer formed of such a polyamide copolymer may have a thickness determined in view of a balance between the shirring processability and stretchability, and the high-temperature creep resistance, required of the product multilayer casing film in combination with the first polyamide layer, and further in view of the entire thickness and mechanical strength of the multilayer casing film, in a range of ordinarily 15 - 40 μm, particularly 15 - 30 μm, which may preferably be thicker by 5 - 20 μm than the first polyamide layer so as to ensure a necessary level of stretchability of the multilayer casing film.

It is preferred that the above-mentioned two polyamide layers respectively constitute surface layers of the multilayer casing film of the present invention, particularly preferably the first polyamide layer consisting an inner surface layer and the second polyamide layer constituting an outer surface layer. This is preferred in order to ensure a good meat-adhesion characteristic with the content material such as ham by an inner surface layer of the first polyamide layer comprising a polyamide homopolymer and to effectively apply an effect of heating from an outside of a casing (or parison) prior to the stretching as by inflation, etc., by disposing the second polyamide layer having a larger thickness and a better stretchability as the outer surface layer.

In order to facilitate the filling of a cylindrical multilayer casing film with a content material, it is desired to improve the openability of the multilayer casing film. For this purpose, as for the polyamide resin (preferably a polyamide homopolymer), it is possible to form a master batch containing a larger content of calcium carbonate, etc., within a base resin, such as low-density polyethylene (LDPE), ethylene-acrylic acid copolymer (EAA), or ethylene-ethyl acrylate copolymer, and add a small amount of the master batch to a prescribed polyamide resin.

According to the present invention, an adhesive polyolefin layer is disposed in contact with at least one of the polyamide layers. The adhesive polyolefin layer may preferably be disposed adjacent to the first polyamide layer comprising a polyamide homopolymer which contributes to an improvement in high-temperature creep resistance but has insufficient stretchability by itself, whereas it is also possible to insert another polyamide layer having good adhesiveness to the first polyamide layer between the adhesive polyolefin layer and the first polyamide layer (an example thereof being found in Lamination structure example (3) appearing hereinafter). The adhesive polyolefin layer is selected from viewpoints of relatively strongly adhering to the first polyamide layer during and after the stretching and effectively preventing the cracking of the thin first polyamide layer during the forming and processing, and further showing good thermal stability during the forming and processing. More specifically, the adhesive polyolefin layer may comprise an acid-modified polyolefin, i.e., a modified product obtained by modifying an olefin resin, particularly an ethylene-α-olefin copolymer, as a base polymer with a relatively small amount (10 wt. % or less) of an acid modifier selected from unsaturated acids such as maleic acid and fumaric acid, and acid anhydrides or esters of these, and can also comprise a mixture containing such an acid-modified polyolefin in a proportion exceeding 50 wt. % with another thermoplastic resin, such as non-modified polyolefin or ionomer resin. Preferred examples of the ethylene-α-olefin copolymer (particularly a copolymer of ethylene and an α-olefin having 3 - 8 carbon atoms having an α-olefin content of at most 30 wt. %) as a preferable base polymer, may include: very low-density polyethylene (VLDPE), linear low-density polyethylene (LLDPE), and homogeneous ethylene-α-olefin copolymers polymerized by using single-site catalysts. The degree of acid modification of the acid-modified polyolefin or the ratio of mixing of another thermoplastic resin may be determined in relation to the bonding strength with the first polyamide layer and the heat resistance of the resultant adhesive polyolefin layer, and more specifically, may be determined so as to provide an inter-layer adhesion of at least 100 g/15 mm, particularly at least 200 g/15 mm, when laminated with the first polyamide layer.

Further preferred properties of the acid-modified polyolefin (or a mixture principally containing it (in a proportion exceeding 50 wt. %) with another thermoplastic resin) may include: a melting point of at least 110 °C (or a density of ca. 0.850 g/cm$^3$ or higher) from the viewpoint of heat-resistance in the food production step, a density of at most 0.935 g/cm$^3$ from the viewpoint of co-stretchability with the first polyamide layer, and a Vicat softening point of at most 110 °C from the viewpoint of adhesion with the first polyamide layer.

The adhesive polyolefin layer may preferably have a thickness in a range of generally 0.5 - 25 μm, particularly 0.5 - 5 μm.

The multilayer casing film of the present invention incudes the above-mention first polyamide layer, second polyamide layer and adhesive polyolefin layer adjacent to the first polyamide layer as essential constituent layers, whereas in view of the use thereof as a material for packaging food such as ham and sausage, it is possible to insert one or more intermediate layers between the two polyamide layers, that is, between the second polyamide layer and the adhesive polyolefin layer, for purposes of further improvement of, e.g., water vapor-barrier characteristic (for prevention of weight loss due to dissipation of moisture from the content material), gas-barrier characteristic (particularly oxygen-barrier characteristic, for the purpose of preventing degradation of the content material), strength and thermal resistance.

For example, as an anti-water vapor permeation resin, it is preferred to use a polyolefin, specific examples of which may include: homogenous polyolefins polymerized by using single-site catalysts (hereinafter sometimes abbreviated as "SSC"), such as linear medium-density polyethylene, linear low-density polyethylene (hereinafter abbreviated as "SSC-LLDPE), and linear very low-density polyethylene (hereinafter abbreviated as "SSC-VLDPE", also called a "plastomer"), and conventional ethylene-$\alpha$-olefin copolymers (such as LLDPE and VLDPE). Representative examples of SSC-polyolefins may include those commercially available under trade names of "AFFINITY" and "ELETE" from Dow Chemical Company. Other examples of polyethylene resins obtained by using metallocene catalysts include "EXACT" available from Exxon CO. It is preferred to use a polyolefin having a density below 0.920 g/cm$^3$, further preferably a single-site catalyst-type polyethylene having a density of at most 0.915 g/cm$^3$, because of good stretchability, thus providing a multilayer film having a large heat-shrinkability. It is preferred that the polyolefin layer has a thickness in the range of 5 - 40 μm, particularly 10 - 30 μm.

As examples of the gas-barrier resin, it is possible to enumerate: saponified products of ethylene-vinyl acetate copolymers (EVOH); aromatic polyamides comprising an aromatic diamine, such as nylon MXD6; and aromatic diamines comprising an aromatic carboxylic acid, such as nylon 6I-6T. The gas-barrier resin layer may preferably have a thickness of preferably 1 - 20 μm, further preferably 2 - 10 μm. A thickness below 1 μm is liable to result in a lower gas-barrier property, and a thickness exceeding 20 μm makes difficult the forming and processing of the multilayer casing film.

In the case where a strength and further a heat-resistance are required, it is possible to use a resin selected from thermoplastic resins, such as polypropylene resin and polyester resin. As the polyester resin, it is possible to either of aliphatic polyester resin and aromatic polyester resin, but aromatic polyester resin is preferred, particularly preferably a polyester between terephthalic acid as a dicarboxylic acid component and a diol having at most 8 carbon atoms, such as polyethylene terephthalate or polybutylene terephthalate. It is also possible to preferably use a copolyester formed by replacing a part, preferably up to 12 mol %, of the terephthalic acid with another dicarboxylic acid, such as isophthalic acid. It is preferred to use a polyester having an inherent viscosity of ca. 0.6 - 0.8. Such an intermediate layer may preferably be formed in a thickness in the range of 2 - 15 μm.

Between the intermediate layer and the second polyamide layer or between a plurality of intermediate layers when used, an adhesive layer may be disposed according to necessity. Such an adhesive layer may preferably be formed of the above-mentioned acid-modified polyolefin but can also be formed of another conventional adhesive thermoplastic resin appropriately selected from ethylene-vinyl acetate copolymer (EVA), ethylene-methacrylic acid copolymer, ethylene-methacrylic acid-unsaturated aliphatic carboxylic acid ester copolymers, ionomer resins, ethylene-acrylic acid copolymer (EAA), ethylene-methyl acrylate copolymer, ethylene-ethyl acrylate copolymer (EEA), ethylene-butyl acrylate copolymer, etc. The adhesive layer may preferably be formed in a thickness in the range of generally 0.5 - 30 μm.

In order to obtain a colored multilayer casing film, it is possible to add a pigment to a polyolefin resin constituting an intermediate layer. In this case, it is preferred to prepare a master batch containing a pigment at a higher concentration dispersed in a resin such as LDPE or EAA and add the master batch to a prescribed polyolefin resin. Ordinarily, the coloring of a casing film is effective for attracting a buying instinct of consumers and suppressing the denaturation and degradation of the content material due to light, and is therefore important in increasing the merchandise value of the packaged product.

In the case of dispersing a pigment in a polyamide resin such as a polyamide homopolymer or a polyamide copolymer, or a gas-barrier resin such as EVOH or nylon MXD6, the stretchability or the gas-barrier property is liable to be lowered in some cases, and in the case of dispersing a pigment in the resin of the adhesive polyolefin layer, the adhesion strength thereof is liable be lowered in some cases. Accordingly, in the case where a high degree of gas-barrier property and water vapor-barrier property are required, it is preferred to dispose separate layers having such properties between the two polyamide layers constituting the multilayer casing film. For example, it is preferred to add a gas-barrier resin layer of EVOH, nylon MXD6, etc. and a polyolefin resin layer in addition to the polyamide homopolymer layer, polyamide copolymer layer and adhesive polyolefin layer as the essential layers, thereby providing an at least 5-layer structure, and it is particularly preferred to disperse a pigment in the polyolefin resin layer. Further, it is preferred to provide a multilayer casing film structure including a gas-barrier resin layer in direct contact with the polyamide copolymer layer, for forming and processing, particularly stretching.

Including the above-mentioned optional intermediate layer and adhesive layer, the thickness of the multilayer film (on a single sheet-basis) of the present invention may preferably have a thickness in a range of 10 - 120 μm, more

preferably 25 - 60 µm. As the thickness is lowered, some anxiety is liable to occur regarding the strength at the time of food filling, during heat-processing or during transportation of the product. As the thickness is increased, the easiness of handling at the time of filling operation and shirring processability can be lowered. The casing film may have a lay-flat width (i.e., a width in a laid-flat and supposed state) ordinary in a range of 30 - 350 mm (corresponding to a circumferential length of 60 - 700 mm). As the lay-flat width is reduced, the content material weight is reduced, so that the thicknesses of the respective layers relating to mechanical thicknesses, such as the high-temperature creep resistance, can be reduced. As for the high-temperature creep resistance, the multilayer casing film according to the present invention should preferably show a deformation of at most 15 %, more preferably below 10 %, when supplied with a tensile stress of at least 0.2 - 0.3 $kg/mm^2$ at a heat-processing temperature of ca. 70 - 80 °C.

Preferred lamination structure examples of the multilayer casing film according to the present invention including optional intermediate layers may include those enumerated hereinbelow each including layers described sequentially from an outer layer to an inner layer:

(1) polyamide copolymer layer/adhesive polyolefin layer/polyolefin resin layer/adhesive polyolefin layer/polyamide homopolymer layer;
(2) polyamide copolymer layer/gas-barrier resin layer/adhesive polyolefin layer/polyolefin resin layer/adhesive polyolefin layer/polyamide homopolymer layer;
(3) polyamide copolymer layer/adhesive polyolefin layer/polyolefin resin layer/adhesive polyolefin layer/polyamide copolymer layer/polyamide homopolymer layer.

The multilayer casing film of the present invention may be formed through a process wherein a plurality of extruders are used for co-extrusion of a tubular sheet (called a parison) before stretching, and the parison is biaxially stretched by a known process of inflation into a film. The stretching ratio may preferably be ca. 2 - 4 times in each of machine/transverse directions. More specifically, a tubular product co-extruded through an annular die is cooled to below the melting points of the respective layers by applying water to an outer surface of the tubular product and the cooled tubular product is conveyed to an orientation zone. In the orientation zone, the tubular product is re-heated to a temperature allowing stretching and then passed through and between first and second means for shutting a flow of air in the tubular product. At this time, the tubular product is cooled while air is blown thereinto, whereby the tubular product is stretched in its circumferential direction surrounding the air enclosed therein and is stretched in a vertical direction to form a biaxially stretched tubular film, which is then treated for annealing under the condition of a temperature of ca. 80 - 90 °C and a relaxation rate of ca. 5 - 10 % to produce a tubular biaxially stretched multilayer film.

The multilayer film may have been irradiated with radiation according to a known manner before or after the stretching. The irradiation with radiation can provide a multilayer casing film with improved stretchability, heat resistance or mechanical strength compared with the one not subjected the irradiation. The radiation irradiation has effects of improving the film-formability by stretching and the heat-resistance owing to its effect of providing an appropriate degree of crosslinking. In view of the effect of crosslinking before and after the irradiation, it is preferred to use an electron beam or γ-rays, particularly an electron beam, in view of the handling in production of formed product and high-processing capacity.

In order to provide a packaged product with a beautiful appearance, it is preferred to impart a heat-shrinkability to the multilayer casing film of the present invention. For example, it is preferred to exhibit a shrinkability of ca. 10 - 20 % in each of the machine/transverse directions when dipped in hot water at 80 °C for 10 sec. The provision of a preferable degree of heat-shrinkability or substantial removal of heat-shrinkability may be easily achieved by control of the biaxial stretching ratios, the relaxation rate in the annealing thereafter and the degree of crosslinking, etc., in the above-mentioned production process.

EXAMPLES:

Hereinbelow, the present invention will be described more specifically based on Examples and Comparative Examples.

Resins used for production of multilayer casing films in Examples and Comparative Examples are enumerated hereinbelow, among which mod-$PO_1$ to mod-$PO_7$ are all adhesive resins generally produced by modifying different base polymers by grafting with maleic acid including mod-$PO_1$ to mod-$PO_5$ corresponding to the acid-modified polyolefin used in the present invention and mod-$PO_1$ to mod-$PO_3$ having particularly preferred properties. Incidentally, properties of resins described are based on those measured according to the following methods.

(1) Melting point of resin (Tmp)

By using "DSC7" (made by Perkin-Elmer Corp.), ca. 10 mg of a measurement sample is subjected to temperature increase at a rate of 20 °C/min. to obtain a heat-absorption curve, on which a peaktop temperature is measured as a melting point. In a case of showing plural peaks, a principal peak is taken, and the peaktop temperature thereof is determined as a resin melting point.

(2) Vicat softening point (Tvicat)

Measured according to JIS K7206 wherein the heating is according to the liquid heating method, the loading is according to the A-method ($10 \pm 0.2$N), and the temperature-raising rate is $50 \pm 5$ °C/h.

(3) Melt flow rate (MFR)

Measured according to JIS K 7210.

<Resins>

| | |
|---|---|
| $Ny6_1$: | AMILAN CM1021XF (made by Toray K.K.) (Tmp = 225 °C) |
| $Ny6_2$: | NOVAMID 1020A (made by Mitsubishi Engineering Plastics K.K.) (Tmp = 224 °C) |
| VLDPE: | MORETEC VO398CN (made by Idemitsu Sekiyu Kagaku K.K.), (Tmp = 121 °C, d(density) = 0.907 g/cm$^3$, MFR = 3.3 g/10 min.) |
| EAA: | NOVATEC A210K (made by Nippon Polychem K.K.) (acrylic acid content = 7 wt. %) |
| Ny6-66: | AMILAN CM6041XF (made by Toray K.K.) (Tmp = 195 °C) |
| Ny66-610-MXD6: | BM-18 (made by EMS Co.) (Tmp = 181 °C) |
| EVOH: | EVAL EP-G 156B (made by Kuraray K.K.) (Tmp = 160 °C) |
| $mod-PO_1$: | ADMER NF587 (made by Mitsui Kagaku K.K.) |
| | base polymer: LLDPE |
| | Tmp = 118 °C, |
| | density = 0.907 g/cm$^3$ |
| | Tvicat = 63 °C |
| | MFR (190 °C) = 2.3 g/10 min. |
| $mod-PO_2$: | MODIC F-504 (made by Mitsubishi Kagaku K.K.) |
| | base polymer: VLDPE |
| | Tmp = 120 °C |
| | density = 0.92 g/cm$^3$, |
| | Tvicat = 56 °C |
| | MFR (190 °C) = 3.5 g/10 min. |
| $mod-PO_3$: | ADMER SF730 (made by Mitsui Kagaku K.K.) |
| | base polymer = VLDPE |
| | Tmp = 119 °C |
| | density = 0.90 g/cm$^3$ |
| | Tvicat = 54 °C |
| | MFR (190 °) = 2.7 g/10 min. |
| $mod-PO_4$: | MODIC XM-110K (made by Mitsubishi Yuka K.K.) |
| | base polymer = VLDPE |
| | Tmp = 121 °C |
| | density = 0.92 g/cm$^3$ |
| | Tvicat = 109 °C |
| | MFR (190 °C) = 3.5 g/10 min. |
| $mod-PO_5$: | MODIC XM-400H (made by Mitsubishi Yuka K.K.) |
| | base polymer: VLDPE |
| | Tmp = 121 °C |
| | density = 0.92 g/cm$^3$ |
| | Tvicat = 103 °C |
| | MFR (190 °C) = 1.6 g/10 min. |
| $mod-PO_6$: | ADMER VF500 (made by Mitsui Kagaku K.K.) |
| | base polymer = EVA |
| | Tmp = 90 °C, |

density = 0.93 g/cm$^3$
Tvicat = 74 °C
MFR (190 °C) = 2.0 g/10 min.

mod-Po$_7$:     NUC-ACE GB-201 (mode by Nippon Unicar K.K.)
base polymer: EEA
Tmp = 93 °C
density = 0.934 g/cm$^3$
Tvicat = 58 °C
MFR (190 °C) = 5.0 g/10 min.

Incidentally, mix-Ny$_1$ and mix-Ny$_2$ used in Example 13 described hereinafter are a polyamide copolymer composition and a polyamide homopolymer composition principally comprising Ny6-66 and Ny6$_1$, respectively, mentioned above and having the following formulation ratios:

mix-Ny$_1$:

Ny6-66 90 wt. % + Ny66-610-MXD6 5 wt. % + EAA

5 wt. %

mix-Ny$_2$:

Ny6$_1$ 90 wt. % + Ny66-610-MXD6 5 wt. % + lubricant

master batch* 5 wt. %,

lubricant master batch*: PEM-7Y1442 (made by Sumika Color K.K.), EAA 94 wt. % + CaCo$_3$ 6 wt. %.

(Example 1)

From the above resins, nylon 6-66 (Ny6-66, polyamide copolymer), mod-PO$_1$ (adhesive resin), VLDPE (polyolefin), VLDPE (polyolefin) and nylon 6 (Ny6$_1$, polyamide homopolymer) were selected and respectively extruded through separate extruders, and the melted respective resins were introduced into a co-extrusion annular die and melt-laminated in the die in an order of nylon 6-66/adhesive resin/VLDPE/adhesive resin/nylon 6 from an outer layer to an inner layer, thereby forming a 5-layered co-extruded parison. The thus-obtained parison was showered with cold water of 8 - 20 °C to form a flat tubular product having a lay-flat width of 28 mm and a thickness of 338 mm. The flat tubular product was then immediately passed through a warm water bath at 75 °C, supplementally heated by warm air at 80 - 100 ° from an air ring and then subjected to inflation for simultaneous biaxial stretching in ratios of 2.5 times in machine direction (MD) and 3.1 times in transverse direction (TD), followed by annealing at 80 °C while causing relaxation at rates of 5 % in machine direction (MD) and 7 % in transverse direction (TD). The resultant biaxially stretched multilayer casing film had a lay-flat width of 80 mm, and a thickness (per sheet) of 49 μm.

(Examples 2 to 13, and Comparative Examples 1 to 9)

In respective Examples, 3 to 6 species of resins selected from the above-enumerated resins were respectively extruded trough separate extruders so as to provide layer structures shown in Tables 1 - 3 (wherein numerals in parentheses represent final thicknesses (in μm), and the melted resins were introduced into a co-extrusion annular die and melt-laminated in the die in orders from an outer layer to an inner layer of nylon 6-66/(gas-barrier resin)/(adhesive resin)/(VLDPE)/adhesive resin/nylon 6 (provided that the gas-barrier resin layer, adhesive resin layer and VLDPE layer indicated in the parentheses were omitted in some Examples) to form 3-to 6-layered co-extruded parisons.
Similarly as in Example 1, the respective parisons were thereafter cooled into flat tubular products, heated with warm water and warm air, and then formed into biaxially stretched tubular multilayer casing films each having a lay-flat width of 80 mm and a thickness (per sheet) of 44 to 54 (the value for each Example may be obtained by totaling the respective layer thicknesses shown in Tables 1 - 3) except for changing the biaxial stretching ratios and annealing conditions as shown in Table 4 in respective Examples. Incidentally, the thickness of the flat tubular product before the biaxial stretching in each Example can be obtained by multiplying the total layer thickness in Tables 1 to 3 with a factor below:

$$\text{stretching ratios (MD x TD) x (100 - relaxation}$$

$$\text{rate (\%)/100.}$$

<Evaluation>

Each multilayer casing film prepared in the above Examples was, as it was or after splitting into strips according to necessity, selectively subjected to measurement of following physical properties and evaluated according to the respective standards.

(Physical property measurement methods)

1. Stretchability (1) (adaptability to inflation) (Stretch (1))

The state of formation of a bubble during inflation is evaluated with eyes:

A: An inflation bubble is stably formed and allows good stretching.
B: An inflation bubble moves up and down, but stretching is possible.
C: An inflation bubble is not formed, and stretching is impossible.

2. Heat shrinkability (Shrink)

A sample strip is marked with a starting point and points of 10 cm therefrom in each of the machine direction (MD) and a direction perpendicular thereto (TD), and the marked sample strip is dipped for 10 sec in hot water adjusted at 80 °C, then taken out therefrom and immediately cooled with water at room temperature. Thereafter, distances of marked points from the starting point are measured, and values are obtained by subtracting each measured distances from 10 cm. The obtained values are divided by the original length (10 cm) to obtains shrink values in percentage. Each sample is subjected to 5 times of test, and based on averages, heat-shrink values in respective directions are indicated in a style of e.g., 16/15 (shrink percentage (%) in MD/TD directions, respectively).

3. Wrinkles on casing (Wrinkles)

A casing is filled with pasty sausage and the upper and lower ends thereof are clipped. The casing sample is then heat-treated for 90 min. in warm water at 80 °C, and then immediately water-cooled for 10 min., followed by standing for ca. 12 hours in a refrigerator at 5 °C. Thereafter, the surface of the casing is evaluated with respect to the occurrence of wrinkles thereon.

A: No wrinkles are observed at 100 %-fill.
B: Some wrinkles (2 - 7 lines of wrinkles) are observed at 100 %-fill, but no wrinkles occur at 10 %-excess fill.

Herein, "100 %-fill" is a degree of filling such that pasty sausage is filled so as to provide a circumferential length of a casing which is equal to a circumferential length (a value twice the lay-flat width) of the casing before the filling, and "10 %-excess fill" means that the sausage is filled under pressure so as to provide a circumferential length which is 10 % excess of the circumferential length at the 100 %-fill.

4. High-temperature creep resistance (lower part swelling of casing) (Creep resistance)

A casing is filled with pasty sausage at 100 %-fill in a vertical length of ca. 50 cm between clips, and the filled casing in a hung state is heat-treated for 90 min. in a smoke chamber at 80 °C and then immediately cooled with water for 10 min., followed by standing for ca. 12 hours in a refrigerator at 5 °C. Thereafter, a deformation ratio is calculated as a ratio obtained by dividing a circumferential length at a part 3 cm above the lower clip with a circumferential length at a part 3 cm below the upper clip. Based on the deformation ratio, the evaluation is performed according to the following standard.

A: The deformation ratio is below 1.1.

B: The deformation ratio is 1.1 or above, but below 1.2.
C: The deformation ratio is 1.2 or above.

5. Shirring processability (Shirring)

Evaluation is performed based on difficulty of shirring (processing of a casing into bellows for facilitating the filling with a pasty product):

A: Shirring is easy and a casing of at least 40 m in original length can be folded in a length of 40 cm.
B: Shirring is somewhat difficult because of rigidity of casing.

6. Meat-adhesion characteristic (Meat-adhesion)

A casing is filled with pasty sausage at 100 %-fill, heat-treated for 90 min. in warm water at 80 °C and immediately cooled with water for 10 min., followed by standing for ca. 12 hours in a refrigerator at 5 °C. Thereafter, the casing is opened and observed with respect to the presence or absence of meat-adhesion between the innermost layer of the casing and the content sausage.

A: The inner most layer exhibit good meat-adhesion to the sausage over the entire area.
C: No meat-adhesion of the innermost layer to the sausage is observed.

7. Weight loss (water vapor-permeability)

A casing is filled with pasty sausage at 100 %-fill, heat-treated for 90 min. in warm water at 80 °C and immediately cooled with water for 10 min, followed by standing for ca. 12 hours in a refrigerator at 5 °C. After the above treatment, the casing is left standing for 1 month in an atmosphere of 23 °C and 53 % humidity, and a weight loss of the product is measured thereafter for evaluation according to the following standard.

A: A weigh loss of below 2 %
B: A weigh loss of 2 % or more.

8. Splitting (Cracking during film formation)

Evaluation is performed as to whether even a single vertical cracking of a problematic length (ca. 5 - 10 cm) occurs in a polyamide layer at a product film surface (particularly an innermost Ny6 layer) during 12 hours of continuous film formation.

A: Not occurs
B: Occurs but film formation is possible.
C: Inter-layer pealing occurs between a polyamide layer (Innermost layer or outermost layer) and an adjacent layer, and film formation is impossible.

9. Stretchability (2) (Thermal stability)

Evaluated as to whether or not the production becomes problematic due to lack of thermal stability.

A: Thermally stable and continuous production is possible.
C: Stable production is difficult due to occurrence of bubble rupturing presumably attributable to thermal decomposition of the adhesive resin.

10. Inter-layer adhesion

A measurement sample strip (length (MD) x width (TD) = 100 mm x 15 mm) is preliminarily subjected to peeling at one end in the longitudinal direction for ca. 10 mm between a first polyamide layer and an adhesive intermediate layer and then subjected to a pealing operation by means of "Tensilon RTM-100" (made by Orientec K.K.) at a speed of 200 mm/min. until the remaining length of adhesion is reduced to ca. 10 mm, when a tensile strength during the peeling is pressured. One sample is subjected to 5 times of measurement, and based on the average values, the evaluation results shown in Table 3 are determined based on the following standard:

A: An inter-layer adhesion of at least 20 g/15 mm.
B: Inter-layer peeling was observed already in the product.

11. Gas-barrier characteristic

Oxygen gas-permeability through a casing film is measured by a gas permeability measurement apparatus ("MOCON OXTRAN-100", made by Modern Control Co.) under conditions of 30 °C and 100 %-humidity, and evaluated according to the following standard.

A: Oxygen gas-permeability is at most 200 $cm^3/m^2$. day.atm.
B: Oxygen gas-permeability is 200 $cm^3/m^2$.day.atm or higher but below 500 $cm^3/m^2$.day.atm.

The layer structure and evaluation results of the multilayer casing films in respective examples (Examples and Comparative Examples) are inclusively shown in Tables 1 - 3 below while classifying the examples based on evaluation items.

Table 1*

| Example | Ex. 1 | Ex. 2 | Ex. 3 | Ex. 4 | Ex. 5 | Ex. 6 | Ex. 13 | Comp. Ex. 1 | Comp. Ex. 2 | Comp. Ex. 3 | Comp. Ex. 4 |
|---|---|---|---|---|---|---|---|---|---|---|---|
| **⟨Layer structure⟩** | | | | | | | | | | | |
| 1st ($\mu$m) | Ny6-66 (20) | → | → | → | → | → | mix-Ny$_1$ (20) | Ny6-66 (15) | Ny6$_1$ (20) | Ny6-66 (10) | Ny6-66 (20) |
| 2nd ($\mu$m) | mod-PO$_1$ (2) | → | → | → | mod-PO$_1$ (22) | EVOH (5) | mod-PO$_3$ (7) | mod-PO$_1$ (2) | mod-PO$_1$ (2) | mod-PO$_1$ (2) | mod-PO$_1$ (2) |
| 3rd ($\mu$m) | VLDPE (20) | → | → | → | Ny6$_1$ (7) | mod-PO$_1$ (2) | EVOH (5) | VLDPE (20) | VLDPE (20) | VLDPE (20) | VLDPE (25) |
| 4th ($\mu$m) | mod-PO$_1$ (2) | → | → | → | – | VLDPE (20) | mod-PO$_3$ (7) | mod-PO$_1$ (2) | mod-PO$_1$ (2) | mod-PO$_1$ (2) | – |
| 5th ($\mu$m) | Ny6$_1$ (5) | → | → | Ny6$_1$ (10) | – | mod-PO$_1$ (2) | mix-Ny$_2$ (5) | Ny6$_1$ (15) | Ny6$_1$ (5) | Ny6-66 (10) | – |
| 6th ($\mu$m) | – | – | – | – | – | Ny6$_2$ (5) | – | – | – | – | – |
| **⟨Evaluation⟩** | | | | | | | | | | | |
| Stretch(1) | A | A | A | B | A | A | B | C | C | A | A |
| Shrink (MD/TD) (%) | 16/15 | 13/12 | 9/8 | 16/14 | 16/15 | 13/12 | 12/9 | – | – | 17/16 | 18/18 |
| Wrinkles | A | B | B | A | A | B | B | – | – | A | A |
| Creep resistance | A | A | A | A | A | A | A | – | – | C | C |
| Shirring | A | A | A | B | A | B | B | – | – | A | A |
| Meat-adhesion | A | A | A | A | A | A | A | – | – | A | C |
| Weight loss | A | A | A | A | A | A | A | – | – | A | A |
| Gas-barrier | B | B | B | B | B | A | A | – | – | B | B |

* : "→" in the columns of layer structure means the same as in the left.
The same holds true with Tables 2 - 4.

EP 1 172 202 B1

Table 2

| Example | Ex. 7 | Ex. 8 | Ex. 9 | Ex. 10 | Ex. 11 | Comp. Ex. 5 | Comp. Ex. 6 | Comp. Ex. 7 |
|---|---|---|---|---|---|---|---|---|
| <Layer structure> | | | | | | | | |
| 1st (μm) | Ny6-66 (20) | ↑ | ↑ | ↑ | ↑ | ↑ | ↑ | ↑ |
| 2nd (μm) | mod-PO$_2$ (2) | mod-PO$_3$ (2) | mod-PO$_3$ (10) | mod-PO$_4$ (2) | mod-PO$_6$ (2) | mod-PO$_6$ (2) | mod-PO$_7$ (2) | mod-PO$_5$ (10) |
| 3rd (μm) | VLDPE (20) | ↑ | EVOH (5) | VLDPE (20) | ↑ | ↑ | ↑ | EVOH (5) |
| 4th (μm) | mod-PO$_2$ (2) | mod-PO$_3$ (2) | mod-PO$_3$ (10) | mod-PO$_4$ (2) | mod-PO$_5$ (2) | mod-PO$_6$ (2) | mod-PO$_7$ (2) | mod-PO$_5$ (10) |
| 5th (μm) | Ny6$_1$ (5) | ↑ | ↑ | ↑ | ↑ | ↑ | ↑ | ↑ |
| <Evaluation> | | | | | | | | |
| Splitting | A | A | A | B | B | A | A | C |
| Stretch (2) (thermal stability) | A | A | A | A | A | C | C | A |

Table 3

| Example | Ex. 12 | Comp. Ex. 8 | Comp. Ex. 9 |
|---|---|---|---|
| <Layer structure> 1st (μm) | Ny6-66 (20) | → | → |

Table 3   (continued)

| Example | Ex. 12 | Comp. Ex. 8 | Comp. Ex. 9 |
|---|---|---|---|
| 2nd ($\mu$m) | mod-PO$_2$ /VLDPE (2) 70/30 | mod-PO$_2$ /VLDPE (2) 30/70 | mod-PO$_2$ /VLDPE (2) 10/90 |
| 3rd ($\mu$m) | VLDPE (20) | $\rightarrow$ | $\rightarrow$ |
| 4th ($\mu$m) | mod-PO$_2$ /VLDPE (2) 70/30 | mod-PO$_2$ /VLDPE (2) 30/70 | mod-PO$_2$ /VLDPE (2) 10/90 |
| 5th ($\mu$m) | Ny6$_1$ (5) | $\rightarrow$ | $\rightarrow$ |
| <Evaluation> Splitting | A | B | C |
| Inter-layer adhesion | A | C | - |

Table 4

| Example | Ex. 1<br>4,5,7,8<br>10~12<br>Comp.Ex.3,5,6,8 | Ex. 2 | Ex. 3 | Ex. 6 | Ex. 9<br>13 | Comp. Ex. 1<br>2<br>9 | Comp. Ex. 4 | Comp. Ex. 7 |
|---|---|---|---|---|---|---|---|---|
| \<Stretch conditions\><br>Stretch ratios (MD/TD) | 2.5/3.1 | ↑ | ↑ | 3.1/3.1 | 2.8/3.4 | 2.5/3.1 | 2.7/3.7 | 2.8/3.4 |
| Bath Temp. (℃) | 75 | ↑ | ↑ | 80 | ↑ | 75 | ↑ | 80 |
| \<Annealing conditions\><br>Temp. (℃) | 80 | 85 | ↑ | 80 | ↑ | - | 80 | - |
| Relaxation ratio (MD/TD) (%) | 5/7 | ↑ | 10/12 | 10/7 | 3/8 | - | 5/7 | - |

INDUSTRIAL APPLICABILITY:

As is understood from the results of Examples and Comparative Examples in the above Tables 1 - 3, according to the present invention, there is provided a multilayer casing film comprising a combination of different types of polyamide layers and an adhesive polyolefin layer in lamination. The multilayer casing film is excellent in stretchability, heat-shrinkability, shirring processability, etc., can be stably produced by inflation, and has improved high-temperature creep resistance which has been difficult to satisfy simultaneously with the above properties. It has also excellent thermal stability during shaping and processing, and is particularly suitable as a packaging material for foods, such as ham and sausage.

## Claims

1. A shirrable multilayer casing film comprising five laminated layers of a polyamide homopolymer, an adhesive polyolefin, a polyolefin, an adhesive polyolefin and a polyamide copolymer which have been laminated in this order and co-stretched; wherein the polyamide homopolymer layer has a higher melting point and a smaller thickness than the polyamide copolymer layer, and the adhesive polyolefin layer comprises an acid-modified $\alpha$-olefin resin.

2. A multilayer casing film according to claim 1, wherein the adhesive polyolefin layer comprises an acid-modified ethylene-$\alpha$-olefin resin having a melting point of at least 110 °C, a density of at most 0.935 g/cm$^3$ and a Vicat softening point of at most 100 °C.

3. A multilayer casing film according to claim 1 or 2, having a heat-shrinkability.

## Patentansprüche

1. Fältelbare Mehrschichten-Verpackungsfolie, die fünf aufeinanderlaminierte Schichten aus einem Polyamid-Homopolymer, einem Klebe-Polyolefin, einem Polyolefin, einem Klebe-Polyolefin und einem Polyamid-Copolymer umfasst, die in der genannten Reihenfolge aufeinanderlaminiert und gemeinsam verstreckt worden sind, wobei die Polyamid-Homopolymer-Schicht einen höheren Schmelzpunkt und eine geringere Dicke aufweist als die Polyamid-Copolymer-Schicht und die Klebe-Polyolefin-Schicht ein Säure-modifiziertes $\alpha$-Olefinharz umfasst.

2. Mehrschichten-Verpackungsfolie nach Anspruch 1, in der die Klebe-Polyolefin-Schicht ein Säure-modifiziertes Ethylen-$\alpha$-olefinharz mit einem Schmelzpunkt von mindestens 110 °C, einer Dichte von höchstens 0,935 g/cm$^3$ und einem Vicat-Erweichungspunkt von höchstens 100 °C umfasst.

3. Mehrschichten-Verpackungsfolie nach Anspruch 1 oder 2, die wärmeschrumpfbar ist.

## Revendications

1. Feuille de boyau multicouche pouvant être froncée comprenant cinq couches stratifiées en homopolymère de polyamide, polyoléfine adhésive, polyoléfine, polyoléfine adhésive et copolymère de polyamide ayant été stratifiées dans cet ordre et co-étirées ; dans laquelle la couche d'homopolymère de polyamide a un point de fusion supérieur et une épaisseur inférieure à la couche de copolymère de polyamide, et la couche de polyoléfine adhésive com-prend une résine d'$\alpha$-oléfine modifiée par des acides.

2. Feuille de boyau multicouche selon la revendication 1, dans laquelle la couche de polyoléfine adhésive comprend une résine d'$\alpha$-oléfine modifiée par des acides ayant un point de fusion d'au moins 110°C, une densité d'au plus 0,935 g/cm$^3$ et une température de ramollissement Vicat d'au plus 100°C.

3. Feuille de boyau multicouche selon la revendication 1 ou 2, ayant une thermorétractabilité.